# EUROPÄISCHE PATENTSCHRIFT

(11) **EP 0 598 181 B1**
(45) Veröffentlichungstag und Bekanntmachung des Hinweises auf die Patenterteilung: **18.09.1996**
(21) Anmeldenummer: 93109013.8
(22) Anmeldetag: 04.06.1993
(51) Int. Cl.: B23B 5/28

(54) **Verfahren zur spanenden Bearbeitung eines Radsatzes und Einrichtung zur Durchführung des Verfahrens**
Method for working a pair of wheels and device using this method
Méthode pour l'usinage d'une paire de roues et dispositif utilisant cette méthode

(30) Priorität: 17.11.1992 DE 4238787
(43) Veröffentlichungstag der Anmeldung: 25.05.1994
(73) Patentinhaber: HEGENSCHEIDT-MFD GmbH, D-41812 Erkelenz (DE)
(72) Erfinder: Feldewert, Herbert, Dipl.-Ing., W-5140 Erkelenz (DE)
(74) Vertreter: Aubele, Karl B.

(56) Entgegenhaltungen:
- EP-A- 0 528 058
- DE-A- 3 931 747
- DE-B- 1 082 478
- DE-B- 1 124 782
- US-A- 3 203 286

## Beschreibung

Die Erfindung betrifft ein Verfahren zur spanenden Bearbeitung eines Radsatzes, dessen Räder eine Lauffläche und einen Spurkranz mit einer Spurkranzkuppe aufweisen, bei dem der Radsatz in Zentriermitteln aufgenommen und über an der Umfangsfläche mindestens eines Rades des Radsatzes von mindestens einer mit Anlagekraft angelegten Reibrolle, die unter Anlagekraft radialen Lageveränderungen der jeweils momentanen Kontaktfläche folgen kann, angetrieben und/oder abgestützt wird, sowie eine Maschine zur Durchführung des Verfahrens.

Verfahren der beschriebenen Art sind bekannt aus der DE-OS 39 31 747 und der DE-PS 38 09 250. Für das Reprofilieren wird ein Radsatz mit Hilfe von an die Laufflächen der Räder des Radsatzes angelegter Reibrollen, die radialen Lageveränderungen der Laufflächen folgen können, angetrieben. Bei der Reprofilierung wird der Werkstoff unter den Reibrollen weggedreht bis zu einer Übergangszone. Bei der weiteren Spanung kommt dann der bereits reprofilierte Teil der Lauffläche zur Anlage an die Reibrolle, so daß dort weiter angetrieben werden kann. Dieser Übergang der Reibrollen von der unbearbeiteten Radumfangsfläche auf die bereits reprofilierte Radumfangsfläche ist bekannt und kann aus der DE-PS 40 01 793, Figuren 3, 4, 6, 8, 10 und 12 mit zugehörigen Beschreibungsteilen entnommen werden. Mit diesem Verfahren gelingt es, einen durchgehenden, unterbrechungsfreien Schnitt durchzuführen. Bei Anwendung dieses Verfahrens zeigt sich jedoch, daß von solchen Reibrollen häufig Drehspäne in die schon fertig reprofilierte Oberfläche der Räder eingewalzt werden und dort unzulässige Markierungen erzeugen. Zudem wird während des Übergangs der Reibrollen von der noch unbearbeiteten Radumfangsfläche auf die schon fertig reprofilierte Radumfangsfläche von den Reibrollen je eine axiale Kraft auf das zugeordnete Rad und weiter auf den Radsatz ausgeübt, die den Radsatz verformt. Diese Verformung äußert sich in Profilfehlern im Bereich der Lauffläche, die momentan reprofiliert wird.
Außerdem können die Reibrollen insbesondere während der Übergangsphase von dem unbearbeiteten Teil der Radumfangsfläche auf den bereits fertig reprofilierten Teil der Radumfangsfläche je nach momentaner Spantiefe unerwünscht durchrutschen, was zur Beschädigung der Drehwerkzeuge und der Reibrollen führt und auf dem bereits reprofilierten Teil des Profils unzulässige Markierungen hinterläßt.

Mit der DE-PS 12 86 371 und der DE-AS 11 24 782 sind Einrichtungen bekannt geworden, bei denen die Radsätze an den Rädern mit Reibrollen abgestützt und angetrieben werden, die während der Laufflächenbearbeitung am Spurkranz antreiben und nachfolgend umgesetzt werden, um bei der anschließenden Spurkranzbearbeitung an der Lauffläche anzutreiben. Der Radsatz ist hierbei auf den Reibrollen spitzenlos gelagert und die Rollen selbst sind in der Bearbeitungsposition starr angeordnet. Beim Laufflächenantrieb besteht auch hier wieder die Gefahr des Einwalzens von Spänen.
Da bei der Reprofilierung der Lauffläche der Radsatz von den Reibrollen am Spurkranz angetrieben wird, kommt es bei Radsätzen an Fahrzeugen, die mit Spurkranzschmierung gefahren werden, wegen der auf dem Spurkranz haftenden Fettschicht beim Zerspanen zum Durchrutschen der Reibrollen, wodurch die Maschinenleistung gemindert wird und außerdem wieder Drehwerkzeuge und Reibrollen beschädigt werden. Auch tritt wieder eine unzulässige Markierung auf dem bereits reprofilierten Teil des Profils auf. Außerdem kann beim Antreiben des Radsatzes am Spurkranz beim Reprofilieren ein Rattern durch Rundlaufabweichungen oder Formfehler an der Spurkranzkuppe entstehen.

Mit der DE-OS 31 02 091 ist ein Verfahren und eine Einrichtung zum Reprofilieren der Räder von Radsätzen bekannt geworden, wobei der Radsatz von Reibrollen angetrieben wird, die unter Anlagekraft an den Rädern des Radsatzes angelegt und unter Anlagekraft radialen Lageveränderungen der jeweiligen momentanen Kontaktfläche folgen können.
Vor dem Reprofilieren, welches mit einem Fräswerkzeug erfolgt, wird die Spurkranzkuppe mindestens teilweise zylindrisch gedreht. Dieses Zylindrischdrehen erfolgt jedoch, um die Räder des Radsatzes vermessen zu können und um aus den Meßdaten die erforderliche radiale Werkzeugzustellung zu bestimmen.

Weiter ist mit der DE-AS 18 15 689 ein Verfahren und eine Einrichtung zur Vermessung der Reifenprofile von Radsätzen im unzerlegten Eisenbahnfahrzeug bekannt geworden.
Nach diesem Verfahren wird der Radsatz beim Zylindrischdrehen der Spurkranzkuppen vor dem Vermessen ebenfalls von unter Anlagekraft beweglichen Reibrollen angetrieben. Die zylindrisch gedrehten Spurkranzkuppen dienen dann anschließend zur Vermessung des Radsatzes.

Ein weiteres Verfahren zum Reprofilieren der Räder von Radsätzen ist mit der DE-PS 20 36 093 bekannt geworden. Der Radsatz ist beim Reprofilieren spitzenlos gelagert und die Rollen selbst sind in der Bearbeitungsposition starr angeordnet.
Nach diesem Verfahren sollen die Spurkranzkuppen flach und konzentrisch zur Radsatzachse gewalzt werden, um anschließend beim Reprofilieren der Lauffläche als Antriebsfläche für die Reibrolle zu dienen. Um eine ausreichend breite Antriebsfläche zu erzeugen, sind unerwünscht hohe Walzkräfte notwendig, die die Maschine stark belasten.
Bei verfetteten Spurkränzen verbleibt außerdem das Fett auf der flachgewalzten Umfangsfläche und führt zum Durchrutschen der Reibrollen schon beim Flachwalzen und später beim Reprofilieren der Lauffläche. Wird der Radsatz an der Lauffläche angetrieben, besteht wieder die Gefahr des Einwalzens von Spänen.

Mit der DE-AS 12 85 839 ist eine Unterflurradsatzdrehmaschine bekannt geworden, von der Radsätze spitzenlos aufgenommen und beim Reprofilieren der Lauffläche an der Spurkranzumfangsfläche von Reibrollen angetrieben werden, die unter Anlagekraft radialen Lageveränderungen der jeweiligen momentanen Kontaktfläche folgen können. Beim Reprofilieren des Spurkranzes treiben die Reibrollen den Radsatz an der fertiggedrehten Lauffläche an und es besteht dann wieder die Gefahr des Einwalzens von Drehspänen in die bereits reprofilierte Lauffläche. Beim Antreiben auf der Spurkranzumfangsfläche besteht die Gefahr des Durchrutschens der Reibrollen, wenn die Spurkranzkuppe geschmiert oder auf andere Art verschmutzt sind.

Weiter ist der DE-PS 32 15 939 ein Verfahren zur Erhöhung der von Reibrollen übertragbaren Reibkraft bekannt geworden.
Nach diesem Verfahren sollen vor und während des Reprofilierens die für die Reibkraftübertragung vorgesehenen Oberflächenbereiche von reibkraftmindernden Belägen gereinigt werden. Es hat sich gezeigt, daß mit gereinigten Umfangsflächen am Rad eines Radsatzes, an denen die Reibrollen antreiben, hohe Spanleistungen möglich sind. Die Gefahr des Spaneinwalzens bleibt jedoch beim Antrieb an der Lauffläche.
Das Gebrauchsmuster Nr. G 91 09 904 offenbart eine Maschine zur spanenden Bearbeitung eines in Zentriermitteln aufgenommenen und von an Umfangsflächen eine Rades angelegte Reibrollen angetriebenen Radsatzes,bei dem der Radsatz auch von am Spurkranz angelegten Reibrollen , die unter Anlagekraft radialen Lageveränderungen der jeweils momentanen Kontaktflächen folgen können, beim Reprofilieren angetrieben wird.
Nachteilig ist jedoch, daß bei verschmutzten Spurkränzen die gewünschte Spanleistung nicht erreicht wird, und daß durch Formfehler an der Spurkranzkuppe beim Spanen Rattern auftreten kann.

Der Erfindung liegt somit die Aufgabe zugrunde, ein Verfahren vorzuschlagen, die mit dem
- das Einwalzen von Spänen,
- das Entstehen von Profilfehlern durch Axialschub der Reibrollen im Übergabebereich sowie das Durchrutschen der Reibrollen im Übergabebereich,
- ein Durchrutschen der Reibrollen beim Antreiben auf der Spurkranzkuppe wegen Fettverschmierung,
- ein Rattern durch Formfehler an der Spurkranzkuppe beim Antreiben auf der Spurkranzkuppe und eine zu große Spantiefe an der Spurkranzkuppe beim endgültigen Reprofilierschnitt
vermieden werden.
Weiter liegt der Erfindung die Aufgabe zugrunde, eine Maschine zur Durchführung des erfindungsgemäßen Verfahrens vorzuschlagen.

Nachfolgend soll der Begriff "Reibrolle" sowohl solche Rollen bezeichnen,mit denen ein Rad eines Radsatzes angetrieben wird, als auch solche Rollen,auf denen sich das Rad eines Radsatzes abstützt.

Verfahrensmäßig ist diese Aufgabe ausgehend von einem Verfahren der eingangs beschriebenen Art dadurch gelöst, daß an der Spurkranzkuppe mindestens eines Spurkranzes eine konzentrisch zur Rotationsachse der Radsatzachse liegende Umfangsfläche durch Spanung erzeugt wird, wonach der Radsatz während der nachfolgenden Spanung an dieser konzentrischen Umfangsfläche angetrieben wird.
Bei stark verschlissenen Rädern ist das Profil besonders in den Bereichen der Spurkranzkehle und der äußeren Spurkranzflanke abgenutzt, so daß ein durch Reprofilierung herzustellendes Sollprofil sehr weit radial nach innen verlegt werden muß. Hierdurch entsteht im Bereich des Spurkranzes eine besonders große Spantiefe, die beim Reprofilierungsschnitt in einem Spanungsdurchgang störend wirkt. Wird die Spurkranzkuppe vor dem eigentlichen Reprofilierungsschnitt vorgedreht, wird nicht nur eine konzentrisch zur Rotationsachse der Radsatzachse laufende Umfangsfläche erzeugt; es vermindert sich zusätzlich an dieser Stelle die Schnittiefe für die nachfolgende Spanung.
Außerdem wird beim Vordrehen des Spurkranzes der Fettbelag von der Spurkranzkuppe sicher entfernt, so daß die angetriebenen Reibrollen an metallisch blanken Umfangsflächen, die einen sehr großen Reibwert aufweisen und eine hohe Spanleistung ermöglichen, zur Anlage kommen, wobei auch die Gefahr des Durchrutschens der Reibrollen vermindert wird.

Dadurch, daß die Spurkranzkuppe konzentrisch zur Rotationsachse der Radsatzachse vorgedreht wird, werden auch Formfehler, wie Kerben oder Unrundheiten, die durch den Einsatz auf der Schiene entstanden sind, beseitigt. Damit wird die Ursache des Ratterns beim Reprofilieren beseitigt und somit die Qualität des hergestellten Neuprofils verbessert. Durch das Antreiben am vorgedrehten Spurkranz ist ein Umsetzen von Reibrollen bei der nachfolgenden Spanung, die dann schon die eigentliche Reprofilierung sein kann, von einer verschlissenen Radumfangsfläche auf eine fertiggedrehte Radumfangsfläche nicht erforderlich.
Mängel, wie Einwalzen von Spänen in eine fertig reprofilierte Lauffläche und Profilfehler, die sonst durch das Umsetzen der Reibrollen von dem unbearbeiteten Teil der Radumfangsfläche auf den bereits fertig reprofilierten Teil der Radumfangsfläche entstehen, können nicht mehr auftreten. Auch die unerwünschten Axialkräfte, die im Stand der Technik von den an die Laufflächen anzulegenden Reibrollen auf den Radsatz ausgeübt werden, treten nicht mehr auf.

Eine Ausgestaltung des Verfahrens sieht vor, daß der Radsatz für die Spanung an der Spurkranzkuppe an der Lauffläche wenigstens eines Rades des Radsatzes angetrieben wird.

Wenn der Radsatz an der Lauffläche angetrieben wird, ist für das Antreiben nur eine einfach geformte Rolle notwendig und für das nachfolgende Anlegen der Rolle an die konzentrisch gedrehte Umfangsfläche des Spurkranzes ist nur ein kurzer Verschiebeweg des Radsatzes realtiv zur Rolle zurückzulegen. Fett oder anderer Schmutz, der zum Durchrutschen der Reibrollen führen kann, wird beim Überdrehen sicher entfernt, so daß für das Antreiben am Spurkranz dann eine metallisch blanke Oberfläche zur Verfügung steht.

In einer Ausgestaltung des Verfahrens wird vorgeschlagen, daß die konzentrische Umfangsfläche der Spurkranzkuppe zylindrisch hergestellt wird. Durch die zylindrische Form der Kontaktfläche am Rad für die Reibrollen sind nur einfach geformte Reibrollen notwendig, die kostengünstig hergestellt werden können und zugleich eine optimale Linienanlage am Rad bewirken, wodurch die Pressung der Kontaktfläche durch die Reibrolle vermindert wird. Die Reibrollen können eine zylindrische Umfangsfläche eines Durchmessers aufweisen. Es kann aber auch günstig sein, die Reibrollen mit zwei zylindrischen Umfangsflächen verschiedener Durchmesser auszuführen, weil dann eine Umfangsfläche für das Antreiben am Spurkranz und eine Umfangsfläche für das Antreiben an der Lauffläche vorgesehen werden kann und Verschmutzungen einer Umfangsfläche nur schwer auf die andere Umfangsfläche der Reibrolle übergreifen können. Es ist aber auch möglich, um Verschmutzungen auf einen Rollenabschnitt zu begrenzen, bspw. zylindrische Abschnitte der Reibrollen durch einen radialen Einstich oder eine Rille als Sperre voneinander zu trennen, so daß ein Schmutzübergriff verhindert werden kann.
Es ist natürlich auch möglich die Spurkranzkuppe in der Form eines neuen Profils zu überdrehen. Der Reibrollenabschnitt, der für die Anlage an einen so überdrehten Spurkranz vorgesehen ist, kann dann an die gerundete Umfangsfläche angepaßt sein, um einen möglichst weitgehenden Linienkontakt zu erhalten.

Vorrichtungsmäßig ist die Aufgabe ausgehend von einer Maschine zur spanenden Bearbeitung mindestens eines in Zentriermitteln aufgenommenen Radsatzes mit mindestens einer an die Umfangsfläche mindestens eines Rades des Radsatzes anlegbaren Reibrolle sowie mit mindestens einem Werkzeugträger zur Aufnahme und zur Bewegung eines Bearbeitungswerkzeuges, wobei die anlegbare Reibrolle auch unter Anlagekraft so beweglich bleibt, daß sie mindestens radialen Lageveränderungen der jeweils momentanen Kontaktfläche folgen kann, dadurch gelöst, daß mindestens eine angetriebene Reibrolle für eine Anlage an der Spurkranzkuppe mindestens eines Spurkranzes vorgesehen ist.
Mit dieser Maßnahme ist ein Antreiben am Spurkranz beim Reprofilieren oder an der Lauffläche beim Überdrehen des Spurkranzes möglich. Es ist auch möglich, die Reprofilierung in einem durchgehenden Schnitt, beginnend ab der äußeren Radreifenstirnfläche,bis zur inneren Spurkranzflanke durchzuführen, denn durch das Vordrehen der Spurkranzkuppe bzw. das Konzentrischdrehen der Spurkranzumfangsfläche zur Rotationsachse des Radsatzes kann die Schnittiefe an dieser Stelle so verringert werden, daß eine Spanung unter der antreibenden Reibrolle hinweg möglich ist, und das auch ohne Profilfehler.

In einer weiteren Ausgestaltung der Erfindung wird vorgeschlagen, daß die Reibrolle axial verschiebbar und feststellbar angeordnet ist. Eine solche Maschinenausgestaltung ist vorteilhaft, wenn der Radsatz an seinen Lagerkästen aufgenommen wird und eine Verschiebung des Radsatzes nicht mit einfachen Mitteln möglich ist. Die Reibrolle muß dann soweit verschiebbar sein, daß ein Anlegen an die Lauffläche an die Spurkranzumfangsfläche möglich ist.

Nach einer Variante der Erfindung wird vorgeschlagen, daß die Reibrolle mit einem Rollenträger auf einem in axialer Richtung verschiebbaren und feststellbaren Schlitten angeordnet ist.

Diese Ausgestaltung ist besonders günstig bei Unterflurradsatzdrehmaschinen, die den Radsatz im Fahrzeug eingebaut bearbeiten müssen und bei denen ein axiales Verschieben des eingebauten Radsatzes nicht möglich ist. Diese Ausgestaltung soll jedoch nicht auf Unterflurradsatzdrehmaschinen begrenzt sein.

In einer alternativen Ausgestaltung der erfindungsgemäßen Maschine wird vorgeschlagen, daß die Zentriermittel gleichsinnig und synchron axial verschiebbar und feststellbar sind, wobei die Verschiebbarkeit so weit reicht, daß wahlweise Spurkranzkuppe oder Lauffläche zur Anlage an die Reibrolle gebracht werden kann. Eine solche axiale Verschiebung des in Zentriermitteln aufgenommenen Radsatzes ist mit einfachen Mitteln durchführbar. Da die Zentriermittel meist in Pinolen gehaltene Körnerspitzen sind und die Pinolen motorisch bzw. hydraulisch verschiebbar sind, ist durch eine entsprechende Steuerung der Pinolen eine gleichsinnige axiale synchrone Verschiebung der Pinolen mit dem aufgenommenen Radsatz ohne Schwierigkeiten zu erreichen. Diese Art der Pinolensteuerung ist an sich bekannt und braucht deshalb nicht weiter erläutert zu werden.
Die Reibrollen, die so angeordnet sein sollen, daß sie bei Übereinstimmung von Maschinenmitte und Radsatzmitte an der Spurkranzumfangsfläche eines oder beider Räder angreifen können, weisen nach der axialen Verschiebung des Radsatzes aus der Maschinenmitte eine solche Lage zum Radsatz auf, daß der Radsatz an der Lauffläche eines Rades des Radsatzes antreibbar ist. Wird der Radsatz in dieser außermittigen Stellung angetrieben und die Spurkranzkuppen beider Räder bearbeitet, werden konzentrisch zur Rotationsachse der Radsatzachse laufende Umfangsflächen hergestellt. Der Radsatz wird nach diesem Drehvorgang wieder auf Maschinenmitte zurückgeschoben und die Reibrollen können nun an den neu gedrehten Umfangsflächen der Spurkränze für den Reprofilierungsschnitt antreiben.

Die Reibrollen können durchgehend zylindrisch ausgeführt sein oder auch zwei nebeneinanderliegende Zylinderabschnitte unterschiedlicher Durchmesser aufweisen, jedoch auch konisch oder je einen zylindrischen und einen konischen Abschnitt aufweisen.

Um die Kraftübertragung von einer angetriebenen Reibrolle auf das Rad eines Radsatzes zu verbessern, können auch die Umfangsflächen der angetriebenen Reibrollen mit reibungserhöhenden Belägen versehen sein. Hierdurch wird eine Minderung der Anlagekraft der Reibrollen am Rad erreichbar und die Radsatzachse wird geringer belastet und es werden trotzdem ausreichende Schnittiefen bei der Spanung erreicht.

Die Erfindung soll nun anhand der beigefügten Zeichnungen näher erläutert werden.

Es zeigen:
- Figuren 1 und 2: eine Radsatzdrehmaschine mit Reibrollenantrieb für ausgebaute Radsätze
- Figuren 3 und 4: eine Radsatzdrehmaschine mit Reibrollenantrieb für im Fahrzeug eingebaute Radsätze, die jedoch auch für das Reprofilieren ausgebauter Radsätze einsetzbar ist
- Figuren 5 und 6: eine Reibrolle mit zwei unterschiedlichen Durchmessern, angelegt an die Umfangsfläche des Rades
- Figuren 7 und 8: eine Reibrolle mit Bereichen gleicher Durchmesser, angelegt an die Umfangsfläche eines Rades

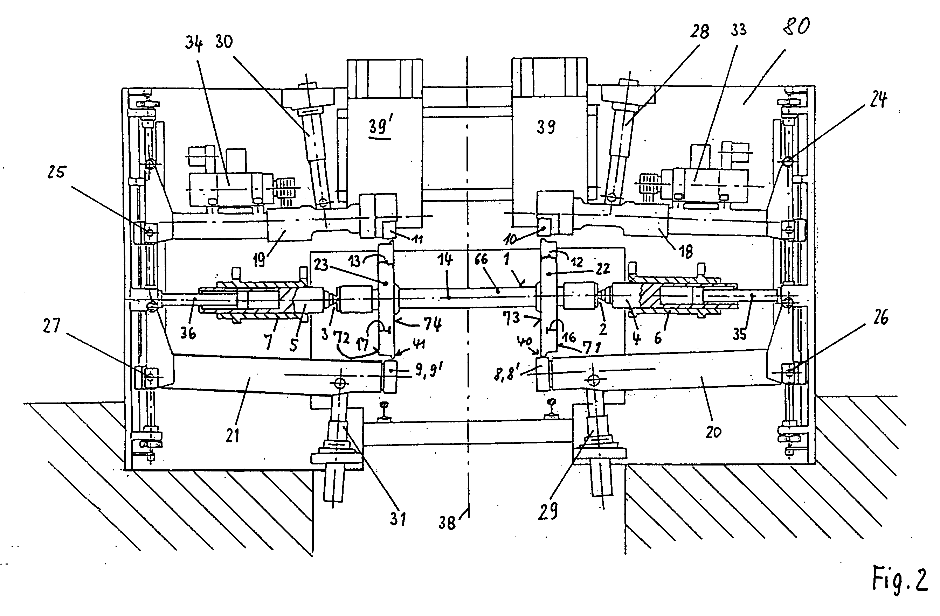

In Figur 2 ist ein Radsatz 1 von Körnerspitzen 2, 3, die jeweils von Pinolen 4, 5, die je verschiebbar in einer Pinolenaufnahme 6, 7 angeordnet sind, aufgenommen und zentriert dargestellt. Die Reibrollen 8, 8', 9, 9', 10, 11, sollen noch nicht an die Umfangsflächen 12, 13 der Räder 22, 23 angelegt sein und die Profile der Räder sind unbearbeitet. Die Pinolenaufnahmen 6, 7 sind als Gehäuse ausgebildet und an dem portalförmigen Ständer 80 befestigt. Sie können mit diesem jedoch auch eine Einheit bilden.
Die Träger 18, 19, welche die Reibrollen 10, 11 tragen, die jeweils von den Antrieben 33, 34 angetrieben werden und die Gegenträger 20, 21, die jeweils zwei Reibrollen, nämlich die Reibrollen 8, 8', 9, 9' tragen, von denen jedoch jeweils nur eine sichtbar dargestellt ist, weisen jeweils an ihren äußeren Enden je einen Schwenkpunkt 24, 25, 26, 27 auf, um den sie von den zugehörigen Kolbenzylindereinheiten 28, 29, 30, 31 geschwenkt und zur Anlage an Räder von Radsätzen gebracht und auch von diesen wieder abgehoben werden können. Diese Kolbenzylindereinheiten sind so geartet und werden so gesteuert, daß die von den Trägern und Gegenträgern getragenen Reibrollen unter Anlagekraft am Rad 22, 23 radialen Lageveränderungen der jeweils momentanen Kontaktfläche folgen können.

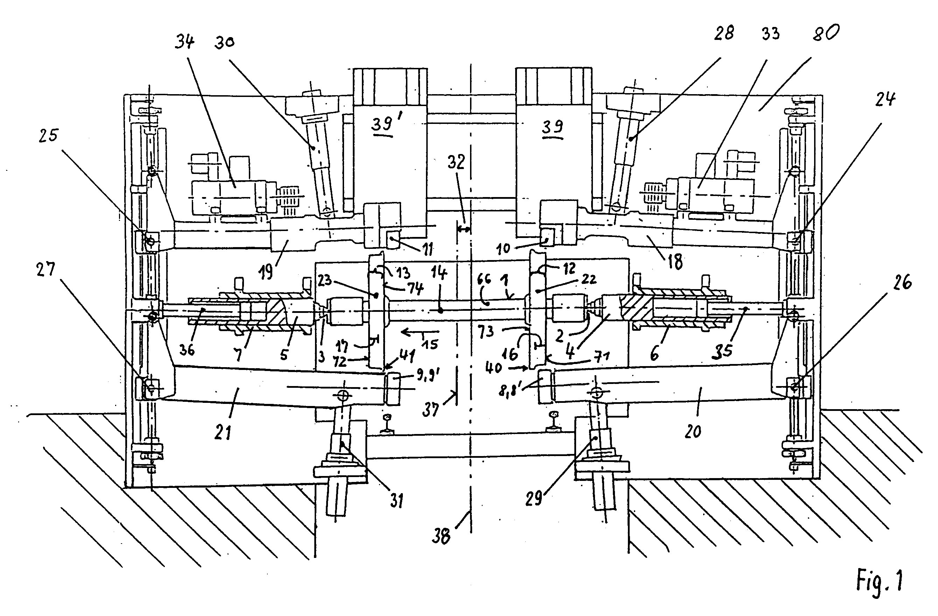

Um vor und während der Reprofilierung den Radsatz 1 an konzentrisch zur Rotationsachse 14 der Radsatzachse 66 laufenden Umfangsflächen 79 von Spurkränzen 40, 41 antreiben zu können, wird der Radsatz 1, wie in Fig. 1 gezeigt, in den Körnerspitzen 2, 3 zentriert und axial um den Verschiebeweg 32 so weit in Richtung des Pfeils 15 verschoben, daß sich die Radsatzmitte 37 um den Betrag des Verschiebeweges 32 von der Maschinenmitte 38 entfernt befindet und daß die Reibrollen 8, 8', 10 an die Lauffläche 16 des Rades 22 angelegt werden können.
Diese Axialverschiebung wird hier bspw. durch in den Pinolen 4, 5 untergebrachte Kolbenzylindereinheiten 35, 36 einschließlich einer dazugehörigen hydraulischen Anlage, die hier nicht weiter dargestellt und erläutert ist, bewirkt. Diese Art der Pinolensteuerung ist an sich bekannt und bedarf somit keiner näheren Erläuterung.

In der außermittigen Lage des Radsatzes werden dann die Reibrollen 8, 8', 10 an die Lauffläche 16 des Rades 22 des Radsatzes 1 angelegt und treiben den Radsatz 1 an, wobei dann jeder Spurkranz 40, 41 der Räder 22, 23 überdreht wird, während die Reibrollen 9, 9' und 11 nicht angelegt werden. Die Werkzeugträger 39, 39', die einen solchen axialen Verschiebeweg aufweisen, daß auch eine Bearbeitung mindestens eines Rades bei außermittiger Lage des Radsatzes möglich ist, tragen die notwendigen Drehwerkzeuge, die nicht weiter dargestellt sind, für diesen Bearbeitungsvorgang. Die so an den Spurkränzen 40, 41 hergestellten Umfangsflächen 79 laufen dann konzentrisch zur Rotationsachse 14 der Radsatzachse 66. Diese Umfangsflächen 79 können zylindrisch gedreht sein, aber auch die vorgeschriebene Profilform einer neuen Spurkranzkuppe aufweisen. Es ist nur notwendig, den Abschnitt der Reibrollen, die bei der Reprofilierung des Radsatzes an dieser neuen Spurkranzumfangsfläche antreiben, so zu gestalten, daß Linienanlagen an den Kontaktflächen der Räder und Reibrollen vorliegen.

Wenn dieses Überdrehen der Spurkränze 40, 41 erledigt ist, wird der Radsatz 1 wieder axial auf Maschinenmitte 38 zurückgeschoben und die Reibrollen 8, 8'; 9, 9': 10; 11 werden dann an die konzentrisch gedrehten Umfangsflächen der Spurkränze 40, 41 der Räder 22, 23 angelegt und der Radsatz 1 dort angetrieben für die Reprofilierung, die dann in einem Zuge, beginnend an der jeweiligen äußeren Radreifenstirnfläche 71, 72 über die Lauffläche 16, 17 und den Spurkranz 40, 41 hinweg bis zur inneren Spurkranzflanke 73, 74 erfolgt. Das Anlegen der Reibrollen 8, 8'; 9, 9'; 10; 11 an die Spurkränze 40, 41 und an die Laufflächen 16, 17 der Räder 22, 23 kann auch bei axial mittiger Lage des Radsatzes in der Maschine erfolgen, wenn die Reibrollen in den Trägern 18, 19 und Gegenträger 20, 21 relativ zur Maschinenmitte 38 bzw. relativ zu den Trägern und Gegenträgern verschiebbar sind.

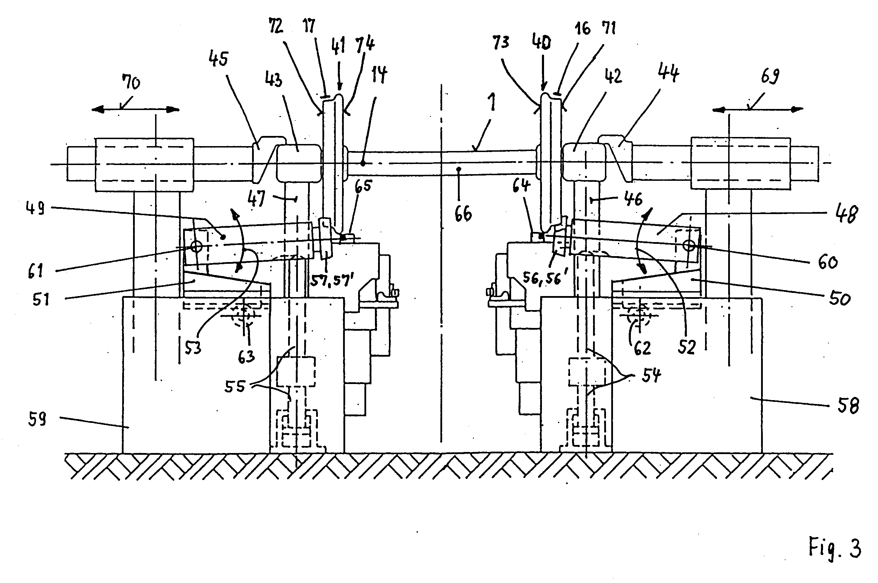

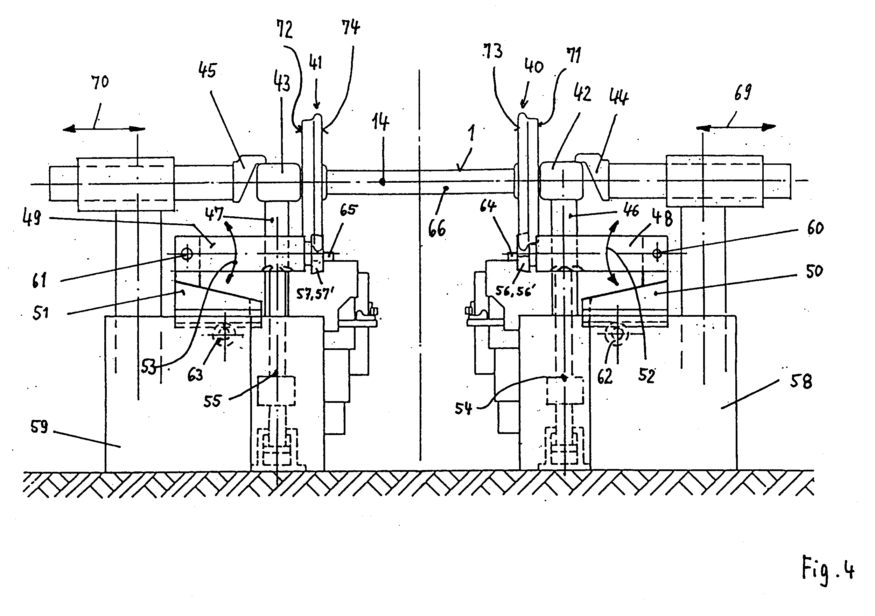

In den Figuren 3 und 4 ist eine Radsatzdrehmaschine mit Reibrollenantrieb dargestellt, auf der der Radsatz 1 in seinen Lagerkästen 42, 43 von je einer Niederhalterung 44, 45 und je einer Stütze 46, 47, die sich wiederum auf den Maschinenständern 58, 59 abstützen, aufgenommen und zentriert ist. Die Rollenträger mit den Reibrollen 56, 56'; 57, 57' sind in Gelenken 60, 61 gelagert, die sich an horizontal beweglichen Schlitten 50, 51 befinden und senkrechte Schwenkbewegungen jedes Rollenträgers 48,49 in Richtung des Pfeils 52, 53 erlauben. Die Lagerung ist hier vereinfacht dargestellt und kann z.B. der Rollenträgerlagerung nach der DE-PS 29 37 751 entsprechen. Jeder Rollenträger 48, 49 trägt zwei Reibrollen, von denen jeweils nur eine sichtbar dargestellt und mindestens eine antreibbar ist. Die senkrecht schwenkbar beweglichen Rollenträger 48, 49 werden jeweils von Kolbenzylindereinheiten 54, 55 abgestützt` deren Abstützung so geartet und gesteuert ist, daß die Reibrollen unter Anlagekraft am Rad des Radsatzes mindestens radialen Lageveränderungenderjeweils momentanen Kontaktfläche folgen können. Die Schlitten 50, 51 sind horizontal und parallel zur Rotationsachse 14 der Radsatzachse 66 in Richtung der Pfeile 69, 70 verschiebbar und werden angetrieben von je einem Getriebe 62, 63 mit Antrieb, der nicht weiter dargestellt ist. Die Schlitten 50, 51 sind in den Stellungen, die für das Antreiben des Radsatzes 1 durch die Reibrollen vorgesehen sind, feststellbar ausgebildet. Diese Feststellbarkeit der Schlitten kann im Getriebe 62, 63 oder durch Anschläge oder Klemmittel für die Schlitten 50, 51 erreicht werden und ist, da an sich bekannt, nicht näher dargestellt.

In Figur 3 ist der Radsatz 1 wie oben beschrieben aufgenommen und zentriert in seinen Lagerkästen 42, 43 und in diesen drehbar. Die Reibrollen 56, 56'; 57, 57' sind an die Laufflächen 16, 17 angelegt und treiben den Radsatz 1 an. Der Antrieb der Reibrollen 56, 56'; 57, 57' ist, da ebenfalls an sich bekannt, nicht weiter dargestellt.
Die Werkzeuge 64, 65, die von den Werkzeugträgern 67, 68 aufgenommen und bewegt werden, bearbeiten die Spurkränze 40, 41 und stellen konzentrisch zur Rotationsachse 14 der Radsatzachse 66 laufende Umfangsflächen 79 her, an denen der Radsatz 1 bei der nachfolgenden Spanung angetrieben wird.
Die an den Spurkränzen hergestellten, konzentrisch zur Rotationsachse 14 laufenden Umfangsflächen 79 können zylindrisch sein. Sie können aber auch die vorgeschriebene Profilform einer neuen Spurkranzkuppe aufweisen. Es ist nun notwendig, die Abschnitte der Reibrollen` die den Radsatz an diesen neuen Spurkranzumfangsflächen antreiben, so zu gestalten, daß Linienanlagen an den Kontaktflächen der Räder und Reibrollen vorliegen
Wenn die Spurkränze 40, 41 an ihren Kuppen fertig bearbeitet sind, werden die Rollenträger 48, 49 mit den Schlitten 50, 51 jeweils in Richtung der Pfeile 69, 70 nach innen verschoben und die Reibrollen 56, 56'; 57, 57' an die neuen Umfangsflächen der Spurkränze 40, 41 angelegt (Figur 4), worauf die Werkzeuge 64, 65 die Reprofilierung in einem Zuge, beginnend an der jeweiligen äußeren Radreifenstirnfläche 71, 72 über die Lauffläche 16, 17 und den Spurkranz 40, 41 hinweg bis zur inneren Spurkranzflanke 73, 74 durchführen.

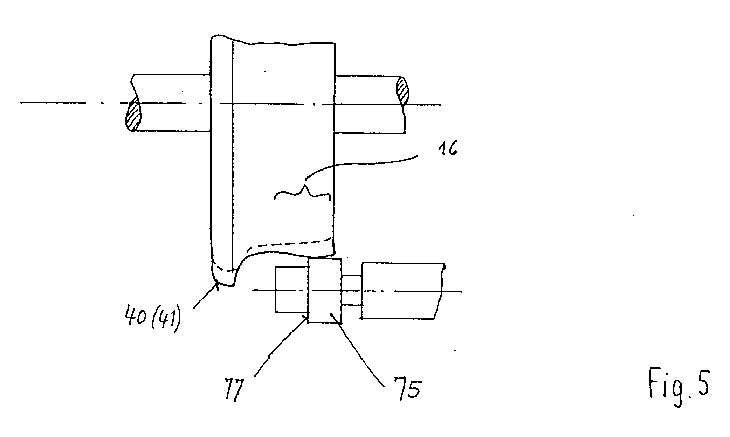

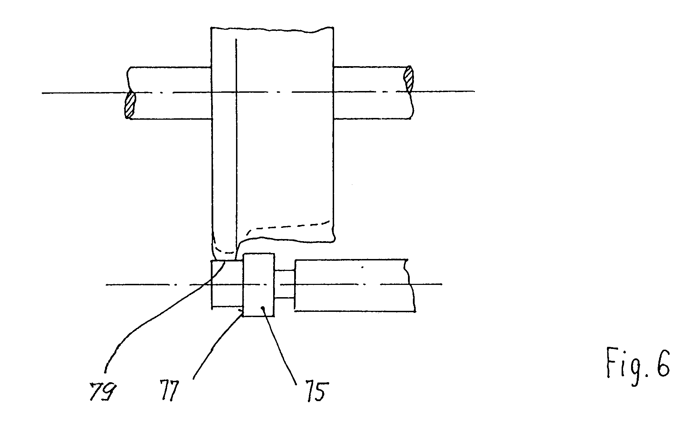

In Figur 5 ist eine Reibrolle 75 dargestellt, angelegt an die Lauffläche 16 eines Rades. Der Spurkranz 40, 41 des Rades wird, während der Radsatz wie dargestellt angetrieben wird, konzentrisch zur Rotationsachse überdreht. Für die weitere Spanung wird die Reibrolle dann mit dem kleineren Durchmesser an die gedrehte Umfangsfläche 79 des Spurkranzes 40, 41 angelegt (Figur 6). Der Absatz 77 zwischen den Rollenabschnitten verhindert, daß Schmutz, bspw. Fett, von einem Rollenabschnitt auf den anderen übertragen wird.

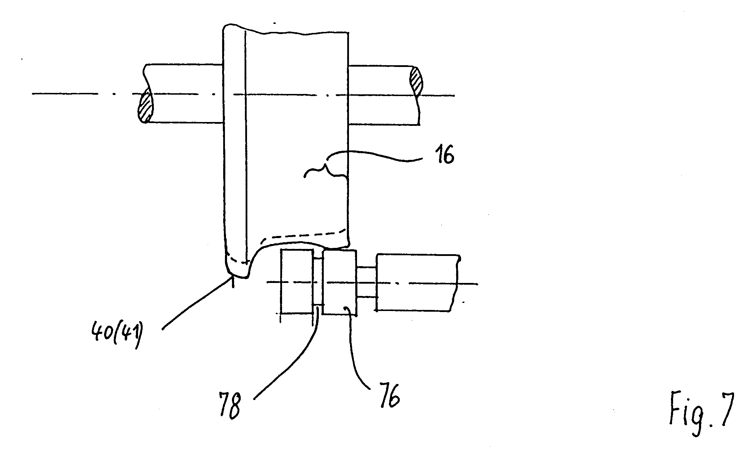

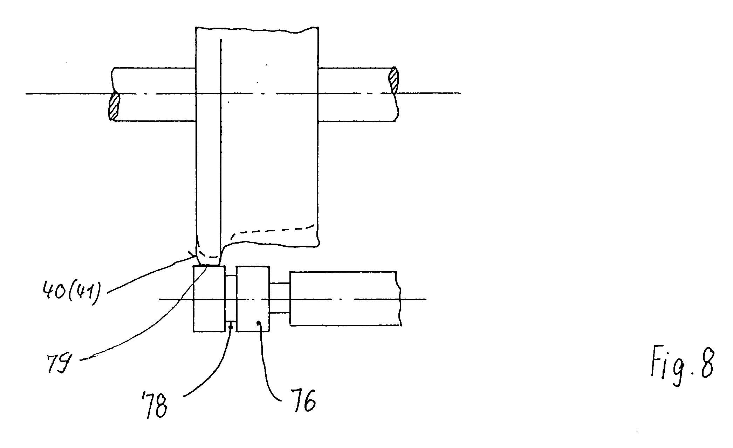

In Figur 7 wird ein Rad eines Radsatzes von einer zylindrischen Reibrolle 76, deren Umfangsflächen durch eine Rille 78 voneinander getrennt sind, an der Lauffläche 16 angetrieben. Der Spurkranz 40, 41 des Rades wird, während der Radsatz` wie dargestellt, angetrieben wird, konzentrisch zur Rotationsachse des Radsatzes überdreht. Für die anschließende weitere Spanung wird die Reibrolle 76 dann mit dem vorher nicht benutzten Rollenabschnitt an die gedrehte Umfangsfläche 79 des Spurkranzes 40, 41 angelegt (Figur 8). Die Rille 78 verhindert, daß Schmutz von einem Rollenabschnitt auf den anderen gelangen kann.

### Liste der verwendeten Bezugszeichen

- 1: Radsatz
- 2: Körnerspitze
- 3: Körnerspitze
- 4: Pinole
- 5: Pinole
- 6: Pinolenaufnahme
- 7: Pinolenaufnahme
- 8, 8': Reibrolle
- 9, 9': Reibrolle
- 10: Reibrolle
- 11: Reibrolle
- 12: Umfangsfläche
- 13: Umfangsfläche
- 14: Rotationsachse
- 15: Pfeil
- 16: Lauffläche
- 17: Lauffläche
- 18: Träger
- 19: Träger
- 20: Gegenträger
- 21: Gegenträger
- 22: Rad
- 23: Rad
- 24: Schwenkpunkt
- 25: Schwenkpunkt
- 26: Schwenkpunkt
- 27: Schwenkpunkt
- 28: Kolbenzylindereinheit
- 29: Kolbenzylindereinheit
- 30: Kolbenzylindereinheit
- 31: Kolbenzylindereinheit
- 32: Verschiebeweg
- 33: Antrieb
- 34: Antrieb
- 35: Kolbenzylindereinheit
- 36: Kolbenzylindereinheit
- 37: Radsatzmitte
- 38: Maschinenmitte
- 39,39': Werkzeugträger
- 40: Spurkranz
- 41: Spurkranz
- 42: Lagerkasten
- 43: Lagerkasten
- 44: Niederhalterung
- 45: Niederhalterung
- 46: Stütze
- 47: Stütze
- 48: Rollenträger
- 49: Rollenträger
- 50: Schlitten
- 51: Schlitten
- 52: Pfeil
- 53: Pfeil
- 54: Kolbenzylindereinheit
- 55: Kolbenzylindereinheit
- 56, 56': Reibrolle
- 57, 57': Reibrolle
- 58: Maschinenständer
- 59: Maschinenständer
- 60: Gelenk
- 61: Gelenk
- 62: Getriebe
- 63: Getriebe
- 64: Werkzeug
- 65: Werkzeug
- 66: Radsatzachse
- 67: Werkzeugträger
- 68: Werkzeugträger
- 69: Pfeil
- 70: Pfeil
- 71: äußere Radreifenstirnfläche
- 72: äußere Radreifenstirnfläche
- 73: innere Radreifenstirnfläche
- 74: innere Radreifenstirnfläche
- 75: Reibrolle
- 76: Reibrolle
- 77: Absatz
- 78: Rille
- 79: zylindrische Umfangsfläche
- 80: Ständer

## Patentansprüche

1. Verfahren zur spanenden Bearbeitung eines Radsatzes (1), dessen Räder (22, 23) eine Lauffläche (16, 17) und einen Spurkranz (40, 41) mit einer Spurkranzkuppe aufweisen, bei dem der Radsatz (1) in Zentriermitteln (2, 4; 3, 5) aufgenommen und über an der Umfangsfläche (12, 13) mindestens eines Rades (22, 23) des Radsatzes (1) von mindestens einer mit Anlagekraft angelegten Reibrolle (8, 8', 9, 9', 10, 11, 56, 56', 57, 57'), die unter Anlagekraft radialen Lageveränderungen der jeweils momentanen Kontaktfläche folgen kann, angetrieben und/oder abgestützt wird, dadurch gekennzeichnet, daß an der Spurkranzkuppe mindestens eines Spurkranzes (40,41) eine konzentrisch zur Rotationsachse (14) der Radsatzachse (66) liegende Umfangsfläche (79) durch Spanung erzeugt wird, wonach der Radsatz (1) während der nachfolgenden Spanung an dieser konzentrischen Umfangsfläche (79) angetrieben wird.

2. Verfahren nach Anspruch 1, dadurch gekennzeichnet, daß der Radsatz (1) für die Spanung an der Spurkranzkuppe an der Lauffläche (16, 17) wenigstens eines Rades (22,23) des Radsatzes (1) angetrieben wird.

3. Verfahren nach Anspruch 1, dadurch gekennzeichnet, daß die konzentrische Umfangsfläche (79) der Spurkranzkuppe zylindrisch hergestellt wird.

4. Maschine zur spanenden Bearbeitung mindestens eines in Zentriermitteln (2, 4; 3, 5) aufgenommenen Radsatzes (1) mit mindestens einer an die Umfangsfläche (12, 13) mindestens eines Rades (22, 23) des Radsatzes (1) anlegbaren Reibrolle (8, 8', 9, 9' 10, 11, 56, 56'; 57, 57') sowie mit mindestens einem Werkzeugträger (39, 39') zur Aufnahme und zur Bewegung eines Bearbeitungswerkzeuges (64, 65), wobei die anlegbare Reibrolle (8, 8', 9, 9', 10, 11, 56, 56', 57, 57') auch unter Anlagekraft so beweglich bleibt, daß sie mindestens radialen Lageveränderungen der jeweils momentanen Kontaktfläche folgen kann, zur Durchführung des Verfahrens nach einem der Ansprüche 1 bis 3, dadurch gekennzeichnet, daß mindestens eine angetriebene Reibrolle (10,11; 56,56'; 57, 57')' für eine Anlage an der Spurkranzkuppe mindestens eines Spurkranzes (40,41) vorgesehen ist.

5. Maschine nach Anspruch 4, dadurch gekennzeichnet, daß die Reibrolle (10,11; 56,56'; 57,57') axial verschiebbar und feststellbar angeordnet ist.

6. Maschine nach Anspruch 5, dadurch gekennzeichnet, daß die Reibrolle (56,56', 57,57') mit einem Rollenträger (48,49) auf einem in axialer Richtung verschiebbaren und feststellbaren Schlitten (50,51) angeordnet ist.

7. Maschine nach Anspruch 4, dadurch gekennzeichnet, daß die Zentriermittel (2,4,; 3,5,) gleichsinnig und synchron axial verschiebbar und feststellbar ausgebildet sind, wobei die Verschiebbarkeit so weit reicht, daß wahlweise Spurkranzkuppe oder Lauffläche zur Anlage an die Reibrolle (8, 8', 9, 9', 10, 11) gebracht werden kann.

8. Maschine nach einem der Ansprüche 4 bis 7, dadurch gekennzeichnet, daß die angetriebene Reibrolle (75) zwei zylindrische Bereiche mit unterschiedlichen Durchmessern aufweist.

9. Maschine nach einem der Ansprüche 4 bis 7, dadurch gekennzeichnet, daß die angetriebene Reibrolle (76) zwei Bereiche mit gleichen Durchmessern aufweist, die durch eine Rille (78) voneinander getrennt sind.

10. Maschine nach einem der Ansprüche 4 bis 9, dadurch gekennzeichnet, daß mindestens ein Bereich der angetriebenen Reibrolle (10,11; 56.56'; 57, 57'; 75, 76) an der Umfangsfläche reibungserhöhende Beläge aufweist.

## Claims

1. Method for working a pair of wheels (1), the wheels (22, 23) of which have a tread (16, 17) and a wheel flange (40, 41) with a wheel flange crest, in which the pair of wheels (1) is mounted in centring means (2, 4; 3, 5) and on the peripheral surface (12, 13) of at least one wheel (22, 23) of the pair of wheels (1) is driven and/or supported by at least one friction roller (8, 8'; 9, 9'; 10, 11, 56, 56', 57, 57') with bearing force which under bearing force can follow radial changes in position of the actual instantaneous contact surface, characterised in that on the wheel flange crest of at least one wheel flange (40, 41) a peripheral surface (79) concentric relative to the axis of the rotation (14) of the wheel pair axle (66) is made by machining, after which the pair of wheels (1) is driven during subsequent machining on said concentric peripheral surface (79).

2. Method according to claim 1, characterised in that the pair of wheels (1) is driven for machining on the wheel flange crest on the tread (16, 17) of at least one wheel (22, 23) of the pair of wheels (1).

3. Method according to claim 1, characterised in that the concentric peripheral surface (79) of the wheel flange crest is cylindrical.

4. Machine for working at least one pair of wheels (1) mounted in centring means (2, 4; 3, 5) with at least one friction roller (8, 8'; 9, 9'; 10, 11, 56, 56', 57, 57') which can be placed on the peripheral surface (12, 13) of at least one wheel (22, 23) of the pair of wheels (1) and at least one tool carrier (39, 39') for mounting and moving a machine tool (64, 65), whereby the friction roller (8, 8'; 9, 9'; 10, 11, 56, 56', 57, 57') remains movable under bearing force so that it can follow at least radial changes in position of the actual instantaneous contact surface, for performing the method according to one of claims 1 to 3, characterised in that at least one driven friction roller (10, 11; 56, 56'; 57, 57') is provided for mounting on the wheel flange crest of at least one wheel flange (40, 41).

5. Machine according to claim 4, characterised in that the friction roller (10, 11; 56, 56'; 57, 57') is arranged to be axially displaceable and securable.

6. Machine according to claim 5, characterised in that the friction roller (56, 56', 57, 57') with a roller carrier (48, 49) is arranged on a slide (50, 51) that is displaceable in an axial direction and securable.

7. Machine according to claim 6, characterised in that the centring means (2, 4; 3, 5) are designed to be axially displaceable and securable in the same direction and synchronously, whereby their displaceability extends so far that optionally the wheel flange crest or tread can be brought to bear on the friction roller (8, 8'; 9, 9'; 10, 11).

8. Machine according to one of claims 4 to 7, characterised in that the driven friction roller (75) has two cylindrical parts with different diameters.

9. Machine according to one of claims 4 to 7, characterised in that the driven friction roller (76) has two parts with equal diameters which are separated from one another by a groove (78).

10. Machine according to one of claims 4 to 9, characterised in that at least one part of the driven friction roller (10, 11; 56, 56'; 57, 57'; 75, 76) has friction-increasing linings on its peripheral surface.

## Revendications

1. Procédé pour l'usinage par enlèvement de copeaux d'un jeu de roues (1) dont les roues (22, 23) comportent une surface de roulement (16, 17) et un boudin (40, 41) pourvu d'un arrondi de boudin, selon lequel le jeu de roues (1) est logé dans des moyens de centrage (2, 4 ; 3, 5) et entraîné et/ou supporté, au niveau de la surface périphérique (12, 13) d'au moins une roue (22, 23) du jeu de roues (1), par au moins un galet de friction (8, 8', 9, 9', 10, 11, 56, 56', 57, 57') qui est appliqué avec une force d'application et qui, soumis à cette force d'application, peut suivre les variations de position radiales de la surface de contact du moment, caractérisé en ce qu'une surface périphérique (79) concentrique par rapport à l'axe de rotation (14) de l'axe de jeu de roues (66) est réalisée par enlèvement de copeaux sur l'arrondi d'au moins un boudin (40, 41), après quoi le jeu de roues (1) est entraîné, pendant l'enlèvement de copeaux qui suit, au niveau de cette surface périphérique concentrique (79).

2. Procédé selon la revendication 1, caractérisé en ce que pour l'enlèvement de copeaux au niveau de l'arrondi de boudin, le jeu de roues (1) est entraîné au niveau de la surface de roulement (16, 17) d'au moins une roue (22, 23) du jeu de roues (1).

3. Procédé selon la revendication 1, caractérisé en ce que la surface périphérique concentrique (79) de l'arrondi de boudin est réalisée suivant une forme cylindrique.

4. Tour pour l'usinage par enlèvement de copeaux d'au moins un jeu de roues (1) logé dans des moyens de centrage (2, 4 ; 3, 5), comportant au moins un galet de friction (8, 8', 9, 9', 10, 11, 56, 56', 57, 57') apte à être appliqué contre la surface périphérique (12, 13) d'au moins une roue (22, 23) du jeu de roues (1), et au moins un porte-outil (39, 39') destiné à recevoir et à déplacer un outil d'usinage (64, 65), étant précisé que le galet de friction (8, 8', 9, 9', 10, 11, 56, 56', 57, 57') apte à être appliqué reste mobile, même soumis à la force d'application, de manière à pouvoir suivre au moins les variations de position radiales de la surface de contact du moment, pour la mise en oeuvre du procédé selon l'une des revendications 1 à 3, caractérisé en ce qu'il est prévu au moins un galet de friction entraîné (10, 11 ; 56, 56' ; 57, 57') pour une application contre l'arrondi d'au moins un boudin (40, 41).

5. Tour selon la revendication 4, caractérisé en ce que le galet de friction (10, 11 ; 56, 56' ; 57, 57') est disposé pour pouvoir être déplacé axialement et bloqué.

6. Tour selon la revendication 5, caractérisé en ce que le galet de friction (56, 56', 57, 57') est disposé, avec un porte-galets (48, 49), sur un chariot (50, 51) mobile dans le sens axial et apte à être bloqué.

7. Tour selon la revendication 4, caractérisé en ce que les moyens de centrage (2, 4 ; 3, 5) sont conçus pour être mobiles axialement dans le même sens et de façon synchrone et pour pouvoir être bloqués, cette mobilité allant jusqu'à permettre d'appliquer au choix l'arrondi de boudin ou la surface de roulement contre le galet de friction (8, 8', 9, 9', 10, 11).

8. Tour selon l'une des revendications 4 à 7, caractérisé en ce que le galet de friction entraîné (75) comporte deux zones cylindriques de diamètres différents.

9. Tour selon l'une des revendications 4 à 7, caractérisé en ce que le galet de friction entraîné (76) comporte deux zones de même diamètre qui sont séparées par une rainure (78).

10. Tour selon l'une des revendications 4 à 9, caractérisé en ce qu'au moins une zone du galet de friction entraîné (10, 11 ; 56, 56' ; 57, 57' ; 75, 76) comporte sur sa surface périphérique des revêtements qui augmentent la friction.
